# EUROPEAN PATENT APPLICATION

(11) **EP 4 528 365 A1**
(43) Date of publication of application: **26.03.2025**
(21) Application number: 23382955.5
(22) Date of filing: 21.09.2023
(51) Int. Cl.: G02F 1/1334, G02F 1/137, G02F 1/15

(54) **SMART FILM ARRANGEMENT FOR MULTIPLE USES AND METHOD FOR MANUFACTURING A SMART FILM ARRANGEMENT**

(71) Applicant: Dream Glass S. L., 28860 Paracuellos De Jarama (ES)
(72) Inventor: MESHKAT MAMALEK, Mojtaba, 28860 Paracuellos De Jarama (ES); BERNARDO SACRISTÁN, Mara, 28860 Paracuellos De Jarama (ES); MURUGAVEL, Abhirami Karattadipalayam, 28860 Paracuellos De Jarama (ES); SOOSAI MANICKAM, Ananthakumar, 28860 Paracuellos De Jarama (ES); AZANI, Mohammad Reza, 28860 Paracuellos De Jarama (ES)
(74) Representative: TRBL Intellectual Property

(57) **Abstract**

The invention provides an optical arrangement comprising a first transparent substrate (10), a second transparent substrate (20), a first transparent conductive electrode (1) deposited on the second face (12) of the first transparent substrate (10), a second transparent conductive electrode (2) deposited on the first face (21) of the second transparent substrate (20) and an active optic material (5) arranged between the first transparent conductive electrode (1) and the second transparent conductive electrode (2). It also comprises a third transparent substrate (30), a third transparent conductive electrode (3) deposited on the second face (22) of the second transparent substrate (20), a fourth transparent conductive electrode (4) deposited on the first face (31) of the third transparent substrate (30) and an ion-storage layer (6) in contact with the third transparent conductive electrode (3). It also comprises an electrolyte layer (7) in contact with the ion-storage layer (6), an electrochromic layer (8) arranged between the electrolyte layer (7) and the fourth transparent conductive electrode (4) and an electronic assembly configured to provide a first electric signal to the first transparent conductive electrode (1), a second electric signal to the second transparent conductive electrode (2), a third electric signal to the third transparent conductive electrode (3) and a fourth electric signal to the fourth transparent conductive electrode (4). The invention also provides a method for manufacturing such an optical arrangement.

## Description

### TECHNICAL FIELD

This invention belongs to the field of smart films comprising components which provide different uses and applications.

### STATE OF THE ART

Smart film and glaze systems are usually employed in producing immediate privacy and or images of attractions applied in partitioning and windows of showrooms, exhibitions, hotels, automotive industries with further applications as the barrier of ultraviolet (UV) and infrared (IR) rays to save energy and bring comfort to the applied spaces.

As a specific example of switchable smart film and glaze, the polymer-dispersed liquid crystals (PDLC) herewith studied. The device can convert transparent sections of substrate to opaque and vice-versa by controlling each section independently or converting the sections to semi-opaque depending on the states of the liquid crystals.

The present invention uses this technology, but provides an advantageous system which improves the use and final result of the device.

### DESCRIPTION OF THE INVENTION

The invention provides an alternative solution for smart film displays by means of a device according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides an optical arrangement comprising
a first transparent substrate comprising a first face and a second face;
a second transparent substrate comprising a first face and a second face;
a first transparent conductive electrode deposited on the second face of the first transparent substrate;
a second transparent conductive electrode deposited on the first face of the second transparent substrate;
a guest-host polymer dispersed liquid crystal film arranged between the first transparent conductive electrode and the second transparent conductive electrode, the guest-host polymer dispersed liquid crystal film being in electric contact with the first transparent conductive electrode and with the second transparent conductive electrode;
a third transparent substrate comprising a first face and a second face;
a third transparent conductive electrode deposited on the second face of the second transparent substrate;
a fourth transparent conductive electrode deposited on the first face of the third transparent substrate;
an ion-storage layer, arranged between the third transparent conductive electrode and the fourth transparent conductive electrode and in contact with the third transparent conductive electrode;
an electrolyte layer, arranged between the ion-storage layer and the fourth transparent conductive electrode and in contact with the ion-storage layer;
an electrochromic layer arranged between the electrolyte layer and the fourth transparent conductive electrode and in contact with the electrolyte layer and with the fourth transparent conductive electrode; and
an electronic assembly configured to provide a first electric signal to the first transparent conductive electrode, a second electric signal to the second transparent conductive electrode, a third electric signal to the third transparent conductive electrode and a fourth electric signal to the fourth transparent conductive electrode.

The Guest-Host Polymer Dispersed Liquid Crystal (GH-PDLC) is an element which comprises a dichroic dye in liquid crystal. The dichroic dyes act as functional dyes with ability to change its orientation. This change of orientation of the dye, in addition to the behaviour of the liquid crystal, produces a very high level of opacity in off-position and a very high level of transparency in On-position. As the result our invention, in case of using black dichroic dye could become a real blackout in Off-State and fully transparent in On-State with resulting a very high contrast which is highly required for automotive industry and for the building glazing. In addition, GH-PDLC displays, require lower voltage than normal PDLC displays resulting in lower energy consumption.

The Dual-Band Electrochromic Layer (DB-EL) either comprises metal nanoparticles or highly doped metal oxide nanocrystals which exhibit low surface plasmon resonance (LSPR) at a specific and tuneable wavelength (such as infrared wavelength) by an appropriate selection of the chemical composition and nanostructure. If this property is combined with electrochromism (in a single material or as a nanocomposite), the transmission of light at the infrared region can be switched independently of the visible light transmission. Within this approach, three different operational modes can be exploited: a first mode (fully transparent mode) in which both the visible light and infrared light is transmitted, a second mode (cool mode) in which the infrared light is blocked and the visible light is transmitted, and a third mode (dark mode) in which both the visible and infrared light is blocked.

These modes of operation represent an important advantage of dual-band electrochromic layers (DB-EL) versus the current existing glazing technologies to control the IR radiation. Namely, most of the currently available IR filters are static in nature as they filter the IR light permanently. Alternatively, DB-EL offer the possibility of modulating the amount of IR light transmitted independently of the visible light transmission. Thus, this technology permit to modulate the solar heat gain through a window according to the climate and season variations, e.g., they can reduce the solar heat gain during hot days while allow heating by radiation in cold conditions.

Besides, the light transmission (either at the IR or at the visible region of the spectra) can be adjusted many different levels and not only in two states such as ON/OFF.

Standard electrochromic devices usually face limitations to achieve a high optical contrast and fast response times, especially for devices with large area.

This optic arrangement provides an advantageous and synergic combination of properties. With a single arrangement as the one defined in the present invention, the user may define different profiles which can be controlled electronically.

A first profile would involve the operation of the DB-EL in OFF-state (without electrical supply) and the GH-PDLC in ON-state (with electrical supply). The result of this first profile would be a highly transparent outcome at both the infrared and visible regions, good for winter receiving heat and having transparency.

A second profile would involve the operation of the DB-EL in OFF-state (without electrical supply) and GH-PDLC also in OFF-state (without electrical supply). The result of this second profile would be a transparent behaviour in the infrared range and an opaque behaviour in visible region, good for winter receiving heat and having opacity.

A third profile would involve the operation of the DB-EL at a first operating voltage value (lower than 2V DC) and the GH-PDLC in ON-state (with electrical supply). The result of this third profile would be the block of infrared light while being transparent to the visible light, good for summer having transparency while blocking infrared rays.

A fourth profile would involve the operation of the DB-EL at a second operating voltage value (comprised between 2V and 4V DC) and the GH-PDLC in ON-state (with electrical supply). The result of this fourth profile would be the block of infrared light an obtaining a partially transparent behaviour to the visible light, good for summer having a partial transparency while blocking infrared rays.

A fifth profile would involve the operation of the DB-EL at a second operating voltage value (comprised between 2V and 4V DC) and the GH-PDLC in OFF-state (without electrical supply). The result of this fifth profile would be the block of infrared light an obtaining a partially transparent behaviour to the visible light, good for summer having a full opacity while blocking infrared rays.

All these profiles could be obtained with the same device, just by changing the electric supply provided to the different transparent conductive electrodes, without permanent filters or any other devices which can permanently modify the behaviour of the device against different circumstances.

In some particular embodiments, the first transparent conductive electrode is divided into sections, each first section being electrically isolated with respect to the rest of the first sections.

These sections are used to create patterns or figures, which can selectively provide the advantages of the active optical material, while other sections of the optical arrangement have a different behaviour.

In some particular embodiments, the guest-host polymer dispersed liquid crystal film has a thickness comprised between 5 and 100 micro-meters.

A lower thickness would not be enough for the present application.

In some particular embodiments, the first transparent conductive electrode and/or the second transparent conductive electrode and/or the third transparent conductive electrode and/or the fourth transparent conductive electrode comprises Indium Tin Oxide, silver nanowires, carbon nanotubes, graphene, transparent conductive polymers or nanometals.

These examples correspond to materials which provide a good compromise between transparency and electric conductivity.

In some particular embodiments, the first transparent substrate and/or the second transparent substrate and/or the third transparent substrate comprises a glass.

A glass is useful to install the optical arrangement in a building, where a physical separation is needed between two different spaces, and there are different needs of transparency and intimacy.

In some particular embodiments, the first transparent substrate and/or the second transparent substrate and/or the third transparent substrate comprises a polymeric substance, such as polyethylene terephthalate.

A flexible arrangement, such as this polymeric example, may be attached to structures which are already built, thus conferring all the advantages of the invention without the need of re-installing the complete structure.

In some particular embodiments, the optical arrangement further comprises an anti-reflecting coating deposited on the first face of the first transparent substrate and/or on the second face of the third transparent substrate.

An anti-reflecting coating is also advantageous in some outdoor applications, where this invention can be used.

In some particular embodiments, the first electric signal and the second electric signals are alternate current signals.

In some particular embodiments, the electrochromic layer comprises a cathodically colouring material such as sub-stoichiometric tungsten oxide (WO₃₋ₓ), heavily doped TiO₂, Nb₂O₅, MoOa, etc. Within this layer, the intercalation of cations (such as H⁺, Li⁺, Na⁺ or Al³⁺) together with the charge-compensation electrons changes the material from a transparent state to a coloured state. In some particular examples, the electrochromic metal oxide also undergoes LSPR leading to the change in the optical properties in the infrared wavelength.

In some particular embodiments, the ion-storage layer comprises nickel oxide (NiOx), SnO₂, In₂O₃, Ta₂O₅ or iron(II,III) hexacyanoferrate(II,III).This layer can experience anodically coloration upon the removal of electrons and cations (in this example reinforcing the colour change of the main electrochromic layer). Besides, this layer can be a non-colouring redox material that merely acts as an ion storage layer or it can be either omitted in the case the transparent conducting layer (e.g. comprised of ITO) serves as the ion storage layer.

In some particular embodiments, the third electric signal and the fourth electric signals are direct current signals.

In a further inventive aspect, the invention provides a method for manufacturing an optic arrangement according to the first inventive aspect, the method comprising the steps of:
providing a first transparent substrate comprising a first face and a second face
depositing a first transparent conductive electrode on the second face of the first transparent substrate;
providing a second transparent substrate comprising a first face and a second face;
depositing a second transparent conductive electrode on the first face of the second transparent substrate;
depositing a third transparent conductive electrode on the second face of the second transparent substrate;
depositing an ion-storage layer on the third transparent conductive electrode;
encapsulating and curing an active optic material between the first transparent conductive electrode and the second transparent conductive electrode, the active optic material becoming in electric contact with the first transparent conductive electrode and with the second transparent conductive electrode, wherein the active optic material is configured to change a transparency value when subject to an electrical voltage;
providing a third transparent substrate comprising a first face and a second face;
depositing a fourth transparent conductive electrode on the first face of the third transparent substrate;
depositing an electrochromic layer arranged on the fourth transparent conductive electrode; and
encapsulating and curing an electrolyte layer between the ion-storage layer and the electrochromic layer;
connecting an electronic assembly configured to provide a first electric signal to the first transparent conductive electrode, a second electric signal to the second transparent conductive electrode, a third electric signal to the third transparent conductive electrode and a fourth electric signal to the fourth transparent conductive electrode.

In some particular embodiments, the step of depositing a conductive electrode on a substrate is made by means of metal sputtering or metal coating.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

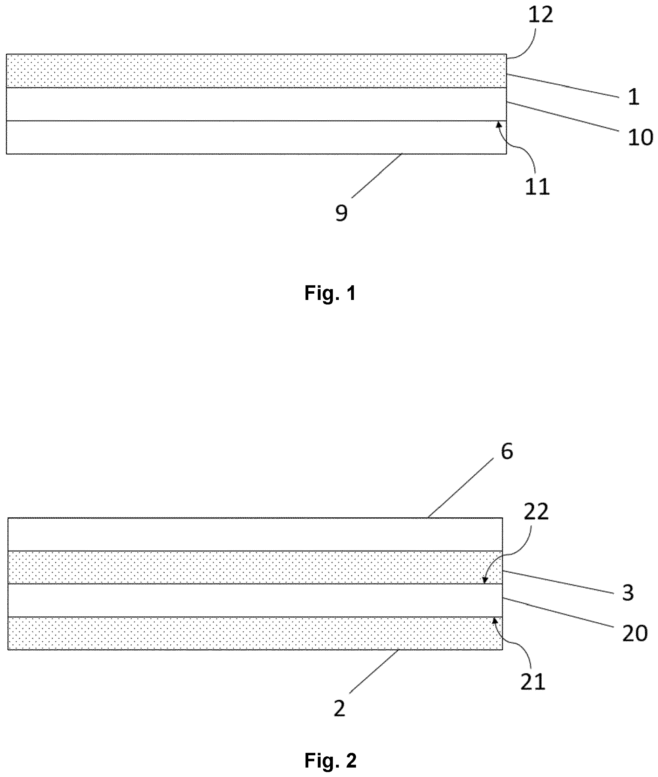

Figures 1 to 5 show a schematic view of some steps of manufacturing of an optic arrangement according to the invention.

In these figures, the following reference numbers have been used:
- 1: First transparent electrode
- 2: Second transparent electrode
- 3: Third transparent electrode
- 4: Fourth transparent electrode
- 5: GH-PDLC material
- 6: Ion-storage layer
- 7: Electrolyte layer
- 8: Electrochromic layer
- 9: Anti-reflective element
- 10: First transparent substrate
- 11: First face of the first transparent substrate
- 12: Second face of the first transparent substrate
- 13: Electronic assembly
- 20: Second transparent substrate
- 21: First face of the second transparent substrate
- 22: Second face of the second transparent substrate
- 30: Third transparent substrate
- 31: First face of the third transparent substrate
- 32: Second face of the third transparent substrate

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

Figures 1 to 5 show a schematic view of some steps of manufacturing of an optic arrangement according to the invention.

In Figure 1, a first transparent substrate 10 is provided. This first transparent substrate 10 comprises a first face 11 and a second face 12. A first transparent conductive electrode 1 is deposited on the second face 12 of the first transparent substrate 10, while an anti-coating element 9 is deposited on the first face 11 of the first transparent substrate 10. This deposition may be made by metal sputtering or metal coating.

In Figure 2, a second transparent substrate 20 is provided. This second transparent substrate 20 comprises a first face 21 and a second face 22. A second transparent conductive electrode 2 is deposited on the first face 21 of the second transparent substrate 20 and a third transparent conductive electrode 3 is deposited on the second face 22 of the second transparent substrate 20. After that, an ion-storage layer 6 is deposited on the third transparent conductive electrode 3.

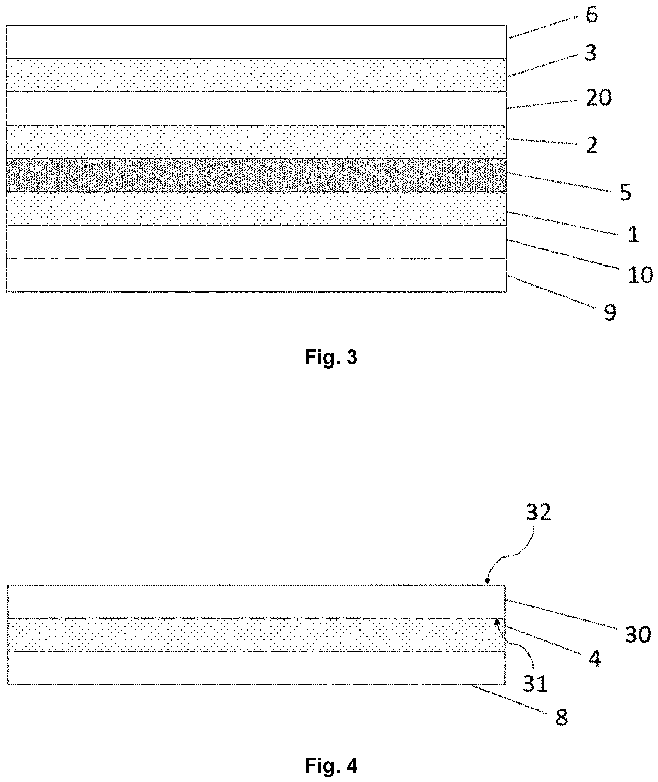

In Figure 3, a guest-host polymer dispersed liquid crystal film 5 is encapsulated and cured between the first transparent conductive electrode 1 (which is part of the assembly obtained in Figure 1) and the second transparent conductive electrode 2 (which is part of the assembly obtained in Figure 2). The Guest-Host Polymer Dispersed Liquid Crystal (GH-PDLC) is an element which comprises a dichroic dye in liquid crystal. The dichroic dyes act as functional dyes with ability to change its orientation. This change of orientation of the dye, in addition to the behaviour of the liquid crystal, produces a very high level of opacity in off-position and a very high level of transparency in On-position. As the result our invention, in case of using black dichroic dye could become a real blackout in Off-State and fully transparent in On-State with resulting a very high contrast which is highly required for automotive industry and for the building glazing. In addition, GH-PDLC displays, require lower voltage than normal PDLC displays resulting in lower energy consumption.

In Figure 4, a third transparent substrate 30 comprising a first face 31 and a second face 32 is provided. Then, a fourth transparent conductive electrode 4 is deposited on the first face 31 of the third transparent substrate 30. After this, an electrochromic layer 8 is deposited on the fourth transparent conductive electrode 4.

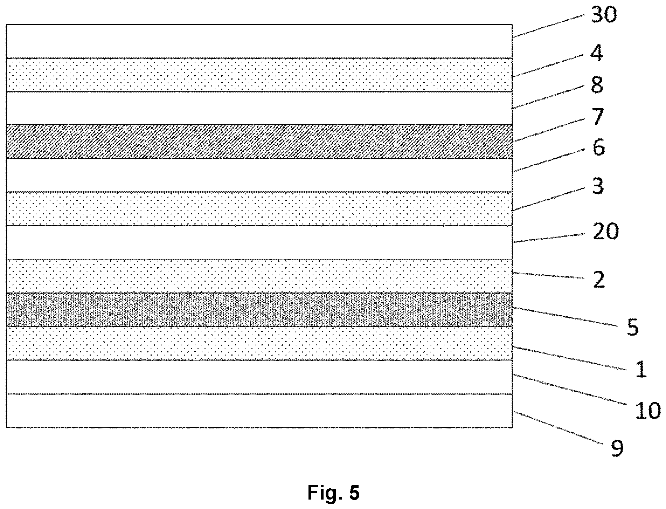

Figure 5 shows an electrolyte layer 7 which is encapsulated and cured between the ion-storage layer 6 (which is part of the assembly obtained in Figure 3) and the electrochromic layer 8 (which is part of the assembly obtained in Figure 4). After this operation, an electronic assembly is connected to the final structure, the electronic assembly being configured to provide a first electric signal to the first transparent conductive electrode 1, a second electric signal to the second transparent conductive electrode 2, a third electric signal to the third transparent conductive electrode 3 and a fourth electric signal to the fourth transparent conductive electrode 4.

The final assembly of Figure 5 shows the following elements:
a first transparent substrate 10 comprising a first face 11 and a second face 12;
a second transparent substrate 20 comprising a first face 21 and a second face 22;
a first transparent conductive electrode 1 deposited on the second face 12 of the first transparent substrate 10;
a second transparent conductive electrode 2 deposited on the first face 21 of the second transparent substrate 20;
a GH-PDLC material 5 arranged between the first transparent conductive electrode 1 and the second transparent conductive electrode 2, the GH-PDLC material 5 being in electric contact with the first transparent conductive electrode 1 and with the second transparent conductive electrode 2;
a third transparent substrate 30 comprising a first face 31 and a second face 32;
a third transparent conductive electrode 3 deposited on the second face 22 of the second transparent substrate 20;
a fourth transparent conductive electrode 4 deposited on the first face 31 of the third transparent substrate 30;
an ion-storage layer 6, arranged between the third transparent conductive electrode 3 and the fourth transparent conductive electrode 4 and in contact with the third transparent conductive electrode 3;
an electrolyte layer 7, arranged between the ion-storage layer 6 and the fourth transparent conductive electrode 4 and in contact with the ion-storage layer 6;
an electrochromic layer 8 arranged between the electrolyte layer 7 and the fourth transparent conductive electrode 4 and in contact with the electrolyte layer 7 and with the fourth transparent conductive electrode 4; and
an electronic assembly 13 configured to provide a first electric signal to the first transparent conductive electrode 1, a second electric signal to the second transparent conductive electrode 2, a third electric signal to the third transparent conductive electrode 3 and a fourth electric signal to the fourth transparent conductive electrode 4.

The first transparent conductive electrode 1 and the second transparent conductive electrode 2 usually employs Indium Tin Oxide, while the third transparent conductive electrode 3 and the fourth transparent conductive electrode 4 comprises silver nanowires.

This optic arrangement provides an advantageous combination of the properties of an electrochromic device and active optical materials. Electrochromic materials can be activated when desired to create an infrared barrier or a customized colour pattern. With this barrier, an amount of thermal energy may be saved at a cost of a little electrical energy supplied to the electrochromic layers. Also, the active optical material provides an ultraviolet barrier if desired, so that an advantageous combination of both works for an even better thermal barrier.

This optical device can be used in different situations.

A first situation, for example, can be the following one. When the first signal and the second signal are the same (thus causing no voltage between the two sides of the PDLC material), the PDLC material remains opaque, thus providing an ultraviolet barrier and privacy protection from the outside. In combination with this situation, the third and fourth signals may be the same or different. If they are different, the electrochromic layer is activated and the corresponding colour (e.g., blue) can be seen. If they are the same, the electrochromic layer is not activated, so the colour will be the one of the PDLC material.

If the first signal and the second signal are different, (thus causing a voltage between the two sides of the PDLC material), the PDLC material becomes transparent. In combination with this situation, the third and fourth signals may be the same or different. If they are different, the electrochromic layer is activated and the corresponding colour (e.g., blue) can be seen in a transparent mode. If they are the same, the electrochromic layer is not activated, so the assembly will be totally transparent.

In this case, the first transparent substrate, the second transparent substrate and the third transparent substrate comprises a glass.

A glass is useful to install the optical arrangement in a building, where a physical separation is needed between two different spaces, and there are different needs of transparency and intimacy.

A second situation can be exemplified as follows. In this case, the first transparent conductive electrode is divided into sections, each first section being electrically isolated with respect to the rest of the first sections.

These sections are used to create patterns or figures, which can selectively provide the advantages of the active optical material, while other sections of the optical arrangement have a different behaviour.

The electronic arrangement is now configured to feed each one of the sections with a different signal, to selectively activate or deactivate any of the sections, thus creating said patterns. These patterns can be combined with the operation of the electrochromic device, so that these sections can be fully transparent, with a coloured transparency, opaque with colour or opaque without colour.

In this case, the first transparent substrate, the second transparent substrate and the third transparent substrate comprises polyethylene terephthalate.

A flexible arrangement, such as this polymeric example, may be attached to structures which are already built, thus conferring all the advantages of the invention without the need of re-installing the complete structure.

## Claims

1. Optical arrangement comprising
a first transparent substrate (10) comprising a first face (11) and a second face (12);
a second transparent substrate (20) comprising a first face (21) and a second face (22);
a first transparent conductive electrode (1) deposited on the second face (12) of the first transparent substrate (10);
a second transparent conductive electrode (2) deposited on the first face (21) of the second transparent substrate (20);
a guest-host polymer dispersed liquid crystal film (5) arranged between the first transparent conductive electrode (1) and the second transparent conductive electrode (2), the guest-host polymer dispersed liquid crystal film (5) being in electric contact with the first transparent conductive electrode (1) and with the second transparent conductive electrode (2);
a third transparent substrate (30) comprising a first face (31) and a second face (32);
a third transparent conductive electrode (3) deposited on the second face (22) of the second transparent substrate (20);
a fourth transparent conductive electrode (4) deposited on the first face (31) of the third transparent substrate (30);
an ion-storage layer (6), arranged between the third transparent conductive electrode (3) and the fourth transparent conductive electrode (4) and in contact with the third transparent conductive electrode (3);
an electrolyte layer (7), arranged between the ion-storage layer (6) and the fourth transparent conductive electrode (4) and in contact with the ion-storage layer (6);
an electrochromic layer (8) arranged between the electrolyte layer (7) and the fourth transparent conductive electrode (4) and in contact with the electrolyte layer (7) and with the fourth transparent conductive electrode (4); and
an electronic assembly configured to provide a first electric signal to the first transparent conductive electrode (1), a second electric signal to the second transparent conductive electrode (2), a third electric signal to the third transparent conductive electrode (3) and a fourth electric signal to the fourth transparent conductive electrode (4).

2. Optical arrangement according to claim 1, wherein the first transparent conductive electrode (1) is divided into sections, each first section being electrically isolated with respect to the rest of the first sections.

3. Optical arrangement according to any of the preceding claims, wherein the guest-host polymer dispersed liquid crystal film (3) has a thickness comprised between 5 and 100 micro-meters.

4. Optical arrangement according to any of the preceding claims, wherein the first transparent conductive electrode (1) and/or the second transparent conductive electrode (2) and/or the third transparent conductive electrode (3) and/or the fourth transparent conductive electrode (4) comprises Indium Tin Oxide, silver nanowires, carbon nanotubes, graphene, transparent conductive polymers or nanometals.

5. Optical arrangement according to any of the preceding claims, wherein the first transparent substrate (4) and/or the second transparent substrate (5) and/or the third transparent substrate (5) comprises a glass.

6. Optical arrangement according to any of the preceding claims, wherein the first transparent substrate (4) and/or the second transparent substrate (5) and/or the third transparent substrate (5) comprises a polymeric substance, such as polyethylene terephthalate.

7. Optical arrangement according to any of the preceding claims, further comprising an anti-reflecting coating (9) deposited on the first face (11) of the first transparent substrate (10) and/or on the second face (32) of the third transparent substrate (3).

8. Optical arrangement according to any of the preceding claims, wherein the first electric signal and the second electric signals are alternate current signals.

9. Optical arrangement according to any of the preceding claims, wherein the electrochromic layer (8) comprises a cathodically colouring material such as sub-stoichiometric tungsten oxide (WO3-x), heavily doped TiO2, Nb2O5, MoO3.

10. Optical arrangement according to any of the preceding claims, wherein the ion-storage layer (6) comprises nickel oxide (NiOx), SnO2, ln2O3, Ta2O5 or iron(II,III) hexacyanoferrate(II, III).

11. Optical arrangement according to any of the preceding claims, wherein the third electric signal and the fourth electric signals are direct current signals.

12. Method for manufacturing an optic arrangement according to any of the preceding claims, the method comprising the steps of:
providing a first transparent substrate (10) comprising a first face (11) and a second face (12)
depositing a first transparent conductive electrode (1) on the second face (12) of the first transparent substrate (10);
providing a second transparent substrate (20) comprising a first face (21) and a second face (22);
depositing a second transparent conductive electrode (2) on the first face (21) of the second transparent substrate (20);
depositing a third transparent conductive electrode (3) on the second face (22) of the second transparent substrate (20);
depositing an ion-storage layer (6) on the third transparent conductive electrode (3);
encapsulating and curing an active optic material (5) between the first transparent conductive electrode (1) and the second transparent conductive electrode (2), the active optic material (5) becoming in electric contact with the first transparent conductive electrode (1) and with the second transparent conductive electrode (2), wherein the active optic material (5) is configured to change a transparency value when subject to an electrical voltage;
providing a third transparent substrate (30) comprising a first face (31) and a second face (32);
depositing a fourth transparent conductive electrode (4) on the first face (31) of the third transparent substrate (30);
depositing an electrochromic layer (8) arranged on the fourth transparent conductive electrode (4); and
encapsulating and curing an electrolyte layer (7) between the ion-storage layer (6) and the electrochromic layer (8);
connecting an electronic assembly configured to provide a first electric signal to the first transparent conductive electrode (1), a second electric signal to the second transparent conductive electrode (2), a third electric signal to the third transparent conductive electrode (3) and a fourth electric signal to the fourth transparent conductive electrode (4).

13. Method according to claim 12, wherein the step of depositing a conductive electrode on a substrate is made by means of metal sputtering or metal coating.
